# EUROPÄISCHE PATENTSCHRIFT

(11) **EP 2 815 628 B1**
(45) Veröffentlichungstag und Bekanntmachung des Hinweises auf die Patenterteilung: **06.07.2016**
(21) Anmeldenummer: 13703397.3
(22) Anmeldetag: 07.02.2013
(51) Int. Cl.: H05B 3/22, H05B 3/26, G01K 7/16

(54) **FAHRZEUGHEIZUNG UND VERFAHREN ZUR HERSTELLUNG EINER FAHRZEUGHEIZUNG**
VEHICLE HEATING AND METHOD FOR PRODUCING A VEHICLE HEATING
CHAUFFAGE DE VÉHICULE ET PROCÉDÉ DE FABRICATION D'UN CHAUFFAGE DE VÉHICULE

(30) Priorität: 16.02.2012 DE 102012202374
(43) Veröffentlichungstag der Anmeldung: 24.12.2014
(73) Patentinhaber: Webasto SE, 82131 Stockdorf (DE)
(72) Erfinder: BYTZEK, Dietmar, 76726 Germersheim (DE); KABELITZ, Thorsten, 81673 München (DE); GÖTTL, Karl, 83026 Rosenheim (DE); ECKERT, Daniel, 82131 Stockdorf (DE)
(74) Vertreter: Schumacher & Willsau
(86) Internationale Anmeldenummer: PCT/EP2013/052479
(87) Internationale Veröffentlichungsnummer: WO 2013/120767

(56) Entgegenhaltungen:
- WO-A1-2007/029981
- WO-A1-2009/154450
- DE-U1-202011 002 763
- US-A- 4 149 066
- US-B2- 7 224 256

## Beschreibung

Die Erfindung betrifft eine Fahrzeugheizung mit einem Grundkörper, der eine nicht-eigensichere Heizleiterschicht trägt, und mit einer der Heizleiterschicht zugeordneten Sensoreinrichtung, die dazu vorgesehen ist, eine Überschreitung eines Temperaturschwellenwertes zu detektieren.

Weiterhin betrifft die Erfindung ein Verfahren zur Herstellung einer Fahrzeugheizung, insbesondere einer Fahrzeugheizung, wie sie hier beschrieben wird. Das Verfahren sieht dabei vor, dass ein Grundkörper der Fahrzeugheizung mit einer nicht-eigensicheren Heizleiterschicht und mit einer Sensoreinrichtung zur Detektion von Temperaturschwellenwertüberschreitungen ausgestattet wird.

Bei dem Grundkörper kann es sich in beiden Fällen beispielsweise um einen Wärmetauscher handeln, insbesondere um einen Metall/Luft- und/oder einen Metall/Flüssigkeit-Wärmetauscher.

Die WO 2007/029981 A1 beschreibt einen Heizkreis und einen Temperaturfühlerkreis. Beide Stromkreise beziehen elektrische Leistung aus einem Kabel, wobei die Ströme zum Heizen und Messen getrennt sind. Der Sensorstrom fließt durch einen Draht, welcher ausschließlich in einer oberen Ebene eines Zwischenträgers verlegt ist.

Die US 7 224 256 B2 beschreibt Konfigurationen, in denen jeweils ein selbstbeheizter Temperatursensor zur Überwachung einer Flüssigkeit oder eines Gases in einem Behälter verwendet wird. Die Sensoren haben jeweils nur zwei elektrische Anschlüsse, wobei hier die Heizleiterschicht und die Sensorschicht durch eine selbe Schicht aus Wolfram gebildet werden.

Die US 4 149 066 A beschreibt eine temperaturgesteuerte elektrische flexible Heiztafel mit einem ersten Anschlusspaar, das einer Versorgung einer Heizfläche (welche aus Kohlenstoff besteht) mit elektrischer Energie dient. Die Heizfläche ist zwischen Isolierschichten eingelegt. Zur Temperaturerfassung ist zwischen zwei Isolierschichten eine Kunststoffschicht und eine Temperaturerfassungsschicht angeordnet. Die Temperaturerfassungsschicht ist dazu vorgesehen, ihre Leitfähigkeit in Abhängigkeit einer temperaturabhängigen Ausdehnung der Kunststoffschicht zu ändern. Durch die Temperaturerfassungsschicht, welche ausschließlich in der Ebene zwischen der Kunststoffschicht und der Isolierschicht verlegt ist, fließt ein Über wachungsstrom.

Die DE 20 2011 002763 U1 beschreibt eine heizbare Folie mit einer Sensorschicht zur Verwendung für Bodenbeläge in Wohnräumen.

Im Gegensatz zu eigensicheren Heizleiterschichten, beispielsweise PTC-Heizleiterschichten, die einen zu starken Temperaturanstieg durch eine Begrenzung des Stromflusses selbstständig verhindern können, sind hier mit nicht-eigensicheren Heizleiterschichten alle Arten von Heizleiterschichten gemeint, die genau diese Fähigkeit zur Vermeidung von unsicheren Zuständen im Fehlerfall nicht aufweisen.

Die nicht-eigensichere Heizleiterschicht kann, ohne darauf beschränkt zu sein, beispielsweise dazu vorgesehen sein, mit vergleichsweise hohen Spannungen beaufschlagt zu werden (beispielsweise 250 Volt Gleichspannung), wobei zu hohe Spannungen beispielsweise durch eine Pulsweitenmodulation heruntergetaktet werden können, wenn dies vorteilhaft erscheint. Solche im Vergleich zu konventionellen Bordnetzen mit 12 oder 24 Volt relativ hohen Spannungen stehen beispielsweise bei Elektro- oder Hybridfahrzeugen häufig ohnehin zur Verfügung. Beispielsweise in solchen Umgebungen lassen sich durchaus elektrische Fahrzeugheizungen mit einer Leistung im Bereich von drei bis acht Kilowatt betreiben, wobei der Anwendungsbereich der Erfindung jedoch keinesfalls auf diesen Leistungsbereich oder diese Fahrzeugtypen beschränkt ist.

Eine Fahrzeugheizung mit einer Heizleiterschicht in Form eines nicht-eigensicheren Heizelementes ist beispielsweise aus der Patentschrift EP 1 361 089 B1 bekannt. Gemäß dieser Druckschrift sind zur Temperaturüberwachung drei alternative Sensoren zur oberflächenspezifischen Erfassung einer das Heizelement repräsentierenden Wärmestrahlung vorgesehen, wobei das Heizelement als mäanderförmige Wellrippe ausgeführt ist. Einer dieser Sensoren ist als berührungslos arbeitender Infrarotsensor ausgebildet. Ein anderer, das Heizelement berührender Sensor ist in Form einer in das Heizelement integrierten elektrischen Widerstandsleitung vorgesehen. Der dritte dort vorgeschlagene Sensor ist ebenfalls im Bereich des Heizelementes angeordnet beziehungsweise in dieses integriert und arbeitet auf der Grundlage eines temperatursensitiven Lichtwellenleiters. Ein Nachteil der beiden im Bereich des Heizelementes angeordneten Sensoren besteht darin, dass sowohl das nachträgliche Integrieren der Widerstandsleitung als auch das nachträgliche Integrieren des Lichtwellenleiters arbeitsaufwendig und somit kostenintensiv sind, abgesehen davon, dass diese separaten Bauteile selbst vergleichsweise teuer sind. Darüber hinaus sind diese beiden Sensoren aufgrund ihres Leitungscharakters, also einer langgestreckten Zylinderform, unter Umständen nicht dazu in der Lage, punktuelle beziehungsweise lokale Temperaturschwellenwertüberschreitungen zu detektieren, wenn die entsprechend überhitzten Punkte oder Orte nicht zufällig genau unter dem jeweiligen Leiter, sondern beispielsweise im Randbereich der mäanderförmigen Wellrippe liegen.

Aus anderen Bereichen der Technik ist es alternativ zur Verwendung von separaten Bauteilen bekannt, zur Detektion von Temperaturschwellenwertüberschreitungen Sensorschichten auf Grundkörpern vorzusehen, wobei die Sensorschichten durch geeignete Einbrennprozesse direkt auf dem Grundkörper oder auf von diesem bereits getragenen Materialien ausgebildet werden. Dabei wird jedoch stets eine Sensorschicht zwischen dem zu erwärmenden Grundkörper und der Heizleiterschicht vorgesehen. Dies hat den Nachteil, dass dadurch die Wärmeübertragung von der Heizleiterschicht auf den zu erwärmenden Grundkörper verschlechtert wird. Außerdem stellt der Grundkörper für eine benachbarte Sensorschicht eine Wärmesenke dar, was insbesondere die Detektion von nur sehr kleinen beziehungsweise punktuellen überhitzten Bereichen erschweren kann, weil die dort freiwerdende Wärme in vielen Fällen vergleichsweise schnell auf den Grundköper übertragen wird. Die Messergebnisse sind bei einem derartigen Aufbau somit relativ ungenau.

Der Erfindung liegt die Aufgabe zugrunde, ausgehend von den gattungsgemäßen Fahrzeugheizungen und den gattungsgemäßen Verfahren zur Herstellung von Fahrzeugheizungen, eine Lösung für eine kostengünstige und dennoch relativ genau messende Sensoreinrichtung anzugeben, mit der auch punktuelle beziehungsweise lokale Temperaturschwellenwertüberschreitungen sicher detektiert werden können, ohne dass dadurch die Wärmeleitfähigkeit zwischen Grundkörper und Heizleiterschicht nachteilig beeinflusst wird.

Diese Aufgabe wird durch die Merkmale der unabhängigen Ansprüche gelöst. Vorteilhafte Ausgestaltungen und Weiterbildungen der Erfindung ergeben sich aus den abhängigen Ansprüchen.

Vorgeschlagen wird zunächst eine Fahrzeugheizung mit einem Grundkörper, der eine nicht-eigensichere Heizleiterschicht trägt. Dieser nicht-eigensicheren Heizleiterschicht ist eine Sensoreinrichtung zugeordnet, die dazu vorgesehen ist, eine Überschreitung eines Temperaturschwellenwertes zu detektieren. Dabei ist vorgesehen, dass die Sensoreinrichtung eine auf der von dem Grundkörper abgewandten Seite der Heizleiterschicht angeordnete Sensorschicht umfasst, die bezüglich Stromflüssen überwacht wird, die gegebenenfalls im Wesentlichen in Richtung ihrer Flächennormalen auftreten. Bei dieser Lösung befinden sich keine Sensorschichtkomponenten zwischen dem Grundkörper und der Heizleiterschicht. Daher kann zwischen diesen beiden Komponenten für eine optimale Wärmeleitfähigkeit gesorgt werden. Weiterhin wirkt der Grundköper bei einer derartigen Anordnung nicht als gut an die Sensorschicht angebundene Wärmesenke, so dass die Sensorschicht sehr genau arbeiten und beispielsweise kleine lokale Überhitzungen (beispielsweise Glimmpunkte) sicher detektieren kann. Da es sich bei einer Sensorschicht immer im weitesten Sinne um eine zumindest abschnittsweise flächige Schicht handelt, kann diese hinsichtlich eventueller Stromflüsse in Richtung ihrer (ggf. jeweiligen) Flächennormalen überwacht werden. Als in diesem Sinn flächige Sensorschicht soll hierbei beispielsweise auch eine aus einem oder mehreren (ggf. sehr schmalen) Streifen bestehende Sensorschicht verstanden werden, beispielsweise auch eine aus Streifen bestehende Schicht, bei der der Streifen eine Zylinderoberfläche mehrfach und auf verschiedenen Höhen umschlingt, so dass sich eine Vielzahl von (differentiellen) Flächennormalen ergibt. Die Sensorschicht kann dabei einer beispielsweise mäanderförmig angeordneten Heizleiterschicht vom Verlauf her folgen, wobei sie die Heizleiterschicht aber vorzugsweise vollständig überdeckt (Anschlussbereiche können gegebenenfalls ausgespart werden), oder die Sensorschicht kann größere Bereiche des Grundkörpers abdecken. Beispielsweise kann die Sensorschicht als in der Draufsicht rechteckige Sensorschicht über eine mäanderförmige Heizleiterschicht gelegt werden. Dabei kommen sowohl Lösungen in Betracht, bei denen die Sensorschicht direkt über der Heizleiterschicht angeordnet ist, die Sensorschicht die Heizleiterschicht also zumindest abschnittsweise berührt, als auch Lösungen, bei denen zumindest eine Zwischenschicht vorgesehen ist. Bei dem gegebenenfalls zu detektierenden Stromfluss in Richtung der Flächennormalen kann es sich entweder um einen sich aufgrund des momentanen Widerstandes beziehungsweise der momentanen Impedanz der Sensorschicht und der in Richtung der Flächennormalen anliegenden Spannung einstellenden "normalen" Strom handeln, oder um einen Strom, der durch einen Durchschlag oder einen Lichtbogen verursacht wird.

Für einige Fahrzeugheizungen kann vorgesehen sein, dass die Sensorschicht mit Hilfe eines thermischen Spritzverfahrens ausgebildet wurde. Durch den Einsatz von thermischen Spritzverfahren können Sensorschichten hergestellt werden, ohne dass der Grundkörper den für Einbrennprozesse üblichen Temperaturen ausgesetzt wird. Ein derartiges Aufspritzen von Sensorschichten lässt sich vergleichbar günstig wie Einbrennverfahren durchführen, es schränkt jedoch die Anforderungen an die Temperaturverträglichkeit des verwendeten Grundkörpers (beziehungsweise an die von dem Grundkörper bereits getragenen Materialien) deutlich weniger ein. Daher kommen durch den Einsatz eines Aufspritzverfahrens für den Grundkörper auch Materialien in Frage, die bei für Einbrennprozesse üblichen Temperaturen schmelzen oder in ihrer Materialeigenschaft hinsichtlich des vorgesehenen Einsatzzweckes irgendwie anders negativ verändert würden. Beispielsweise kann der Grundkörper durch die Verwendung eines geeigneten Aufspritzverfahrens ganz oder teilweise aus Aluminium bestehen. Selbstverständlich kommt für den Grundkörper auch eine Vielzahl anderer Materialien in Frage, wobei es sich in vielen Fällen um Materialien mit guten Wärmeleiteigenschaften handeln wird. Lediglich beispielhaft seien in diesem Zusammenhang Aluminiumlegierungen, Gläser und Keramiken genannt. Als Beispiele für in Frage kommende thermische Spritzverfahren seien Plasmaspritzverfahren, Kaltgasspritzverfahren oder Flammspritzverfahren genannt. In einigen Fällen kann es vorteilhaft sein, auch andere Bestandteile der Fahrzeugheizung, beispielsweise die Heizleiterschicht, durch ein thermisches Spritzverfahren auszubilden. Als besonders gut geeignete thermische Spritzverfahren werden derzeit Kaltgasplasmaspritzverfahren und Suspensionsflammspritzverfahren betrachtet. Beim Kaltgasspritzen wird ein Gas, beispielsweise Stickstoff, auf hohe Geschwindigkeiten beschleunigt, wobei mit dem Gas beförderte Partikel mit hoher Geschwindigkeit (beispielsweise mehrfacher Schallgeschwindigkeit) auf den Grundkörper oder ein von diesem getragenes Substrat auftreffen und durch die hohe kinetische Energie eine dichte, fest haftende Schicht bilden. Beim Suspensionsflammspritzen wird zunächst eine Suspension mit den aufzuspritzenden Partikeln hergestellt, um diese Suspension dann in eine Flamme einzudüsen. Dabei verdampft die Flüssigkeit zumindest teilweise, vorzugsweise aber ganz, und es treffen (idealerweise) nur die jeweiligen Partikel auf die Zieloberfläche auf, wodurch sich dichte Schichten herstellen lassen. Jedenfalls ist den in Frage kommenden Verfahren zum Aufspritzen der Sensorschicht gemeinsam, dass der Grundkörper dabei nicht den für Einbrennverfahren üblichen hohen Temperaturen ausgesetzt werden muss. In diesem Zusammenhang kann beispielsweise vorgesehen sein, dass der Grundkörper nur Temperaturen von weniger als 800°C, weniger als 650°C und sogar nur weniger als 500°C ausgesetzt wird. Es ist nachvollziehbar, dass die für den Grundkörper (und/oder irgendwelche von diesem bereits getragenen Komponenten) verwendbare Anzahl von Materialien steigt, je niedriger die Temperaturen gehalten werden können. Dabei sollte klar sein, dass die Formulierung "Temperaturen ausgesetzt wird" nicht zwingend bedeuten soll, dass der gesamte Grundkörper diese Temperatur dadurch annehmen soll oder muss. Vielmehr kommt es ausschließlich darauf an, dass der Grundkörper auch nicht abschnittsweise Temperaturen ausgesetzt wird, durch die er Schaden nehmen könnte. Je nach Beschaffenheit des Grundkörpers (Größe, Wärmeleitfähigkeit usw.) kann es daher beispielsweise in einigen Fällen durchaus möglich sein, dass der Grundkörper in den dem Aufspritzvorgang nicht direkt ausgesetzten Bereichen bereits Komponenten (beispielsweise elektrische oder andere Bauteile) trägt, die nur sehr viel niedrigeren Temperaturen als 500°C widerstehen können, beispielsweise nur 100°C oder noch weniger.

Bei einigen Fahrzeugheizungen kann vorgesehen sein, dass die Sensorschicht zumindest bereichsweise eine Widerstands- beziehungsweise Impedanzcharakteristik mit einem negativen Temperaturkoeffizienten aufweist. Der Begriff "negativer Temperaturkoeffizient" ist hier sehr weit auszulegen. Es kommt ausschließlich darauf an, dass die Sensorschicht ihren Widerstand oder ihre Impedanz beim Überschreiten eines vorgegebenen Temperaturschwellenwertes so deutlich verringert, dass dies messtechnisch sicher zu detektieren ist. Um eine Sensorschicht mit negativem Temperaturkoeffizient auszubilden, können beispielsweise Materialien wir Siliziumdioxid, Siliziumcarbid, Aluminiumoxid, Titanoxid und andere Keramiken verwendet werden. Beispielsweise im Falle einer Glaskeramik kann vorgesehen sein, dass diese ein oder mehrere Alkalimetalle enthält, beispielsweise in einem Anteil bis zu zehn Gewichtsprozent. Es kann auch vorgesehen sein, dass die Glaskeramik mit Zirkonoxid, Zirkonsilikat, Quarz, Titanoxid und/oder Zinkoxid dotiert ist oder wird. Der Anteil der Dotierung kann dabei beispielsweise bis zu drei Gewichtsprozent betragen.

Weiterhin sind Fahrzeugheizungen denkbar, bei denen die Sensorschicht zumindest bereichsweise eine Isolationsschicht aufweist, durch die nur bei Durchschlägen oder Lichtbogenbildung ein Stromfluss auftritt, der im Wesentlichen die Richtung ihrer Flächennormalen hat. Bei solchen besonders kostengünstig realisierbaren Ausführungsformen wird anstelle eines Materials mit einem im klassischen Sinne negativen Temperaturkoeffizient ein geeigneter Isolator als Sensormaterial gewählt, dessen Durchschlagsfestigkeit zu den eingesetzten Spannungen und zu den jeweils interessierenden Temperaturschwellenwerten passt. Da beispielsweise Lichtbögen in der Regel nachhaltige Materialveränderungen nach sich ziehen, bieten sich solche Lösungen insbesondere an, wenn die Fahrzeugheizung nach dem Auftreten eines Lichtbogens aus Sicherheitsgründen bis zum Austausch oder einer Reparatur stillgelegt werden soll. Die im vorigen Abschnitt erläuterte Verwendung von zumindest etwas kostenintensiveren NTC-Materialien ermöglicht es im Gegensatz hierzu in vielen Fällen, lokale Überhitzungen, die zur Entstehung von Lichtbögen führen könnten, bereits so frühzeitig zu erkennen, dass es durch die Einleitung geeigneter Gegenmaßnahmen (Verringern oder Unterbrechen des Stromflusses durch die Heizleiterschicht) gar nicht erst zur Entstehung eines Lichtbogens kommt.

In vielen Fällen wird es als vorteilhaft erachtet, wenn die Sensorschicht eine untere Kontaktschicht und eine obere Kontaktschicht umfasst. Eine Messeinrichtung kann dann in einfacher Weise zwischen diese Kontaktschichten oder Elektroden geschaltet werden, um eventuelle Stromflüsse zwischen den Kontaktschichten zu detektieren und aus solchen Stromflüssen gegebenenfalls auf Temperaturschwellenwertüberschreitungen zu schließen. Die Kontaktschichten können entweder ausschließlich Bestandteil der Sensorschicht sein, oder sie können Doppelfunktionen erfüllen. Beispielsweise ist es denkbar, dass eine direkt unter der Sensorschicht liegende Heizleiterschicht gleichzeitig als untere Kontaktschicht verwendet wird oder dass die obere Kontaktschicht gleichzeitig die Funktion einer Abdeckschicht übernimmt. Das soll selbstverständlich nicht ausschließen, dass eine separate obere Abdeckschicht zum Einsatz kommen kann. Jedenfalls bietet sich der Einsatz von Kontaktschichten insbesondere deshalb an, weil beispielsweise zwischen den Kontaktschichten angeordnetes NTC-Material dann als eine zwischen die Kontaktschichten geschaltete Parallelschaltung einer Vielzahl von NTC-Elementen betrachtet werden kann. Auch im Falle der Verwendung eines einfachen Isolators kann ein eventueller Durschlag oder Lichtbogen zwischen den Kontaktschichten mit einer zwischen die Kontaktschichten geschalteten Messeinrichtung detektiert werden, unabhängig davon wo der Durchschlag oder der Lichtbogen genau auftritt.

Weiterhin wird ein Verfahren zur Herstellung einer Fahrzeugheizung vorgeschlagen, insbesondere einer Fahrzeugheizung, wie sie vorstehend erläutert wurde. Das Verfahren sieht vor, einen Grundkörper der Fahrzeugheizung mit einer nicht-eigensicheren Heizleiterschicht und einer Sensoreinrichtung zur Detektion von Temperaturschwellenwertüberschreitungen auszustatten. Dabei wird der Heizleiterschicht auf ihrer von dem Grundkörper abgewandten Seite zur Ausbildung der Sensoreinrichtung eine Sensorschicht zugeordnet, die dazu vorgesehen ist, auf Stromflüsse überwacht zu werden, die gegebenenfalls im Wesentlichen in Richtung der Flächennormalen der Sensorschicht auftreten. Auch diese Lösung führt dazu, dass sich keine Sensorschichtkomponenten zwischen dem Grundkörper und der Heizleiterschicht befinden. Daher kann zwischen diesen beiden Komponenten auch im Rahmen des in Rede stehenden Verfahrens für eine optimale Wärmeleitfähigkeit gesorgt werden. Weiterhin wirkt der Grundköper auch hier nicht als gut an die Sensorschicht angebundene Wärmesenke, so dass die Sensorschicht sehr genau arbeiten und beispielsweise kleine lokale Überhitzungen (beispielsweise Glimmpunkte) sicher detektieren kann. Im Übrigen ergeben sich für das hier in Rede stehende Verfahren die vorstehend im Zusammenhang mit der Fahrzeugheizung erläuterten Vorteile und Eigenschaften in analoger oder ähnlicher Weise, weshalb an dieser Stelle zur Vermeidung von Wiederholungen auf die entsprechenden Ausführungen verwiesen wird.

Gleiches gilt sinngemäß für die im Folgenden erläuterten Varianten des Herstellungsverfahrens, weshalb zur Vermeidung von Wiederholungen hinsichtlich der zugehörigen Eigenschaften und Vorteile erneut auf die oben erläuterten Varianten der Fahrzeugheizung verwiesen wird.

Auch im Rahmen des Verfahrens kann vorgesehen sein, dass die Sensorschicht mit Hilfe eines thermischen Spritzverfahrens ausgebildet wird.

Die Sensorschicht kann durch das Herstellungsverfahren zumindest bereichsweise mit einer Widerstands- beziehungsweise Impedanzcharakteristik ausgestattet werden, die einen negativen Temperaturkoeffizienten aufweist.

Es ist weiterhin denkbar, dass die Sensorschicht zumindest bereichsweise als eine Isolationsschicht ausgebildet wird, durch die nur bei Durchschlägen oder Lichtbogenbildung ein Stromfluss auftritt, der im Wesentlichen die Richtung ihrer Flächennormalen hat.

Auch für das Herstellungsverfahren wird bevorzugt, dass der Sensorschicht eine untere Kontaktschicht und eine obere Kontaktschicht zugeordnet werden.

Aus dem Vorstehenden ergibt sich, dass ein Grundgedanke der Erfindung darin besteht, elektrische Fahrzeugheizungen, insbesondere elektrische Fahrzeugheizungen mit vergleichsweise hohen Betriebsspannungen von beispielsweise einigen hundert Volt Gleichspannung, dadurch kostengünstig herstellen zu können, dass einer von einem Grundkörper getragenen nicht-eigensicheren Heizleiterschicht auf der von dem Grundkörper abgewandten Seite eine im weitesten Sinne flächige Sensorschicht zugeordnet wird. Eine so angeordnete Sensorschicht beeinträchtigt nicht die Wärmeübertragung von der Heizleiterschicht auf den zu erwärmenden Grundkörper. Dennoch erlaubt es eine Überwachung einer derartigen Sensorschicht auf eventuelle Stromflüsse in Richtung ihrer Flächennormalen, auf lokale (und natürlich erst recht auf allgemeine) Überhitzungszustände zu schließen. Mit besonders kostengünstigen Ausführungsformen der Erfindung kann zumindest das Auftreten von Lichtbögen detektiert und ein eventuell gefährlicher Weiterbetrieb der Fahrzeugheizung unterbunden werden. Idealerweise ist die Sensoreinrichtung aber ausreichend sensibel, um potentiell gefährliche Überhitzungszustände so früh zu erkennen, dass geeignete Gegenmaßnahmen rechtzeitig eingeleitet werden können.

Die Erfindung wird nun unter Bezugnahme auf die beigefügten Zeichnungen anhand besonders bevorzugter Ausführungsformen beispielhaft erläutert.

Es zeigen:
- Figur 1: eine schematische, teilweise perspektivische Darstellung einer ersten Ausführungsform einer Fahrzeugheizung, die gleichzeitig Verfahrensschritte zur Herstellung dieser Fahrzeugheizung veranschaulicht;
- Figur 2: eine schematische, teilweise geschnittene Darstellung einer zweiten Ausführungsform einer Fahrzeugheizung, die gleichzeitig Verfahrensschritte zur Herstellung dieser Fahrzeugheizung veranschaulicht;
- Figur 3: eine schematische, teilweise geschnittene Darstellung einer dritten Ausführungsform einer Fahrzeugheizung, die gleichzeitig Verfahrensschritte zur Herstellung dieser Fahrzeugheizung veranschaulicht;
- Figur 4: eine schematische, teilweise geschnittene Darstellung einer vierten Ausführungsform einer Fahrzeugheizung, die gleichzeitig Verfahrensschritte zur Herstellung dieser Fahrzeugheizung veranschaulicht; und
- Figur 5: eine schematische, teilweise geschnittene Darstellung einer dritten Ausführungsform einer Fahrzeugheizung, die gleichzeitig Verfahrensschritte zur Herstellung dieser Fahrzeugheizung veranschaulicht;

In den Figuren bezeichnen gleiche Bezugszeichen gleiche oder ähnliche Komponenten, die zur Vermeidung von Wiederholungen zumindest teilweise nicht mehrfach erläutert werden.

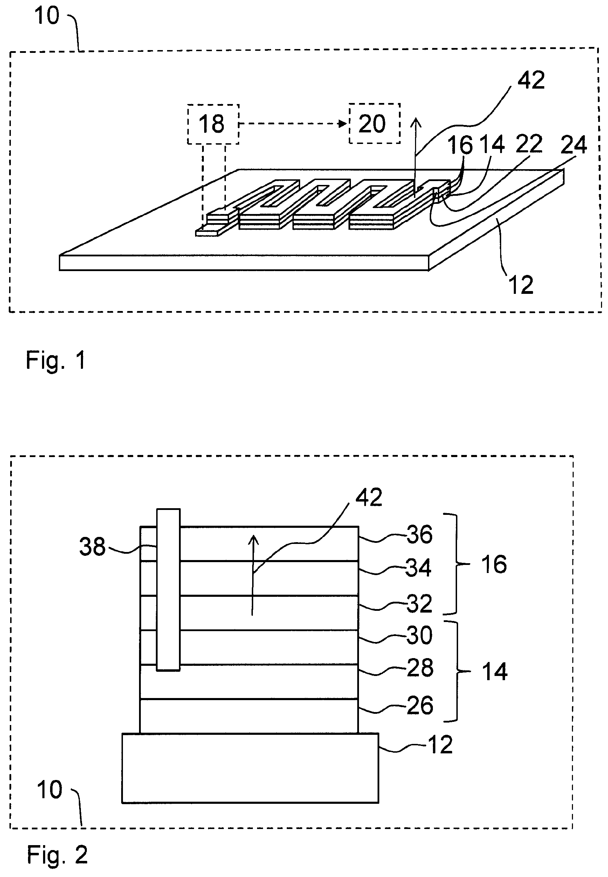

Figur 1 zeigt eine schematische, teilweise perspektivische Darstellung einer ersten Ausführungsform einer Fahrzeugheizung 10, und sie veranschaulicht gleichzeitig Verfahrensschritte zur Herstellung dieser Fahrzeugheizung 10.

Bei der in Figur 1 dargestellten Fahrzeugheizung 10 sowie auch bei allen anderen im Folgenden beschriebenen Fahrzeugheizungen kann es sich sowohl um Luftheizungen als auch um sogenannte Wasserheizungen handeln, beispielsweise - und ohne darauf beschränkt zu sein - für Elektro- oder Hybridautos. Luftheizungen unterscheiden sich von den sogenannten Wasserheizungen dadurch, dass bei Luftheizungen der zu erwärmende Luftstrom direkt über einen Wärmetauscher des Luftheizgerätes geführt wird, während bei den sogenannten Wasserheizungen zunächst eine Flüssigkeit, in der Regel ein Gemisch aus Wasser - daher der Name - und einem Frostschutzmittel, beispielsweise Glykol, über einen Wärmetauscher des Wasserheizgerätes geführt wird, um die Wärme mit Hilfe der Flüssigkeit und eines weiteren Wärmetauschers an den gewünschten Ort zu bringen.

Die in Figur 1 insgesamt nur als Block schematisch dargestellte Fahrzeugheizung 10 weist einen Grundkörper 12 auf, bei dem es sich in diesem Fall um einen Wärmetauscher handelt. Je nach Art der Fahrzeugheizung ist dieser Wärmetauscher 12 dazu vorgesehen, Luft oder eine Flüssigkeit zu erwärmen, wozu der Wärmetauscher 12 an seiner Unterseite nicht dargestellte Rippen oder ähnliche Einrichtungen zur Vergrößerung der für den Wärmetausch wirksamen Oberfläche aufweisen kann.

Bei der Ausführungsform gemäß Figur 1 ist die Heizleiterschicht 14 direkt auf den durch einen Wärmetauscher 12 gebildeten Grundkörper der Fahrzeugheizung 10 aufgespritzt. Die Sensorschicht 16 mit negativem Temperaturkoeffizienten ist Bestandteil einer Sensoreinrichtung, die neben der Sensorschicht 16 auch eine Messeinrichtung 18 und einen Controller 20 umfasst, der nicht ausschließlich der Sensoreinrichtung zugeordnet sein muss. Beispielsweise ist es denkbar, dass der Controller 20 den Betrieb der gesamten Fahrzeugheizung steuert beziehungsweise regelt, oder dass die für die Sensoreinrichtung wesentlichen Funktionen von einem Controller 20 wahrgenommen werden, der ohnehin im Fahrzeug vorhanden ist. Die Sensorschicht 16 umfasst bei dieser Ausführungsform drei Bestandteile, nämlich die Heizleiterschicht 14, die in diesem Fall neben ihrer eigentlichen Funktion als Heizleiter gleichzeitig einen Bestandteil der Sensorschicht 16 bildet, eine durch thermisches Spritzen auf die Heizleiterschicht 14 aufgespritzte Schicht 22 mit einem negativen Temperaturkoeffizienten und eine auf die Schicht 22 aufgebrachte elektrisch leitende obere Kontaktschicht 24. Die Funktionsweise dieses Aufbaus ist wie folgt: Tritt im Bereich der Heizleiterschicht 14 aufgrund irgendeines Fehlers eine zu starke lokale Erwärmung auf, beispielsweise eine Temperatur von mehr als 150 °C, so führt dies bei geeigneter Konditionierung der Schicht 22 mit negativem Temperaturkoeffizienten dazu, dass sich ihr Gesamtwiderstand oder ihre Gesamtimpedanz aufgrund ihres bei negativen Temperaturkoeffizienten dominierenden Parallelschaltungscharakters so verringert, dass dies von der Messeinrichtung 18 sicher erkannt werden kann. Zu diesem Zweck ist die Messeinrichtung 18, wie durch die gestrichelten Linien angedeutet, zwischen die zusätzlich als untere Kontaktschicht dienende Heizleiterschicht 14 und die über der Schicht 22 mit negativem Temperaturkoeffizienten vorgesehene obere Kontaktschicht 24 geschaltet. Die Messeinrichtung 18 kann so die lokale Temperaturschwellenwertüberschreitung anhand eines deutlichen Abfalls des zwischen den Kontaktschichten wirksamen Widerstandes oder der zwischen den Kontaktschichten wirksamen Impedanz der Schicht 22 mit negativem Temperaturkoeffizienten sicher detektieren und dem Controller 20 ein entsprechendes Signal liefern. Sollte der jeweilige Temperaturschwellenwert nicht nur lokal sondern in einem größeren Bereich überschritten werden, so lässt sich dies natürlich in der beschriebenen Weise erst recht detektieren, weil dann eben der Widerstand beziehungsweise die Impedanz in mehreren Zweigen der gedachten Parallelschaltung einzelner NTC-Elemente sinkt.

Figur 2 zeigt eine schematische, teilweise geschnittene Darstellung einer zweiten Ausführungsform einer Fahrzeugheizung 10, und sie veranschaulicht gleichzeitig Verfahrensschritte zur Herstellung dieser Fahrzeugheizung 10.

Auch bei der in Figur 2 schematisch dargestellten Fahrzeugheizung 10 ist der Grundkörper 12 durch einen Wärmetauscher 12 gebildet. In diesem Fall besteht der Wärmetauscher 10 jedoch aus einem elektrisch leitfähigen Material, insbesondere aus Aluminium. Daher unterteilt sich die Heizleiterschicht 14 bei dieser Ausführungsform in eine erste Isolationsschicht 26, die eigentliche Heizschicht 28 und eine zweite Isolationsschicht 30. Vorzugsweise werden alle drei Bestandteile der Heizleiterschicht 14 durch ein thermisches Spritzverfahren aufgespritzt. Bezogen auf die Darstellung oberhalb von der insgesamt mit 14 bezeichneten Heizleiterschicht, ist eine insgesamt mit 16 bezeichnete Sensorschicht vorgesehen, die ebenfalls durch ein thermisches Spritzverfahren aufgespritzt wurde und die bei dieser Ausführungsform ihrerseits drei Bestandteile aufweist. Direkt über der zweiten Isolationsschicht 30 befindet sich eine erste elektrisch leitfähige Kontaktschicht 32, auf die eine Schicht 34 aus einem Material mit negativem Temperaturkoeffizienten aufgespritzt wurde. Die Schicht 34 kann - ohne darauf beschränkt zu sein - insbesondere aus einem der Materialen bestehen, die im allgemeinen Teil der Beschreibung für Schichten mit negativem Temperaturkoeffizienten vorgeschlagen wurden. Direkt auf die Schicht 34 mit negativem Temperaturkoeffizienten wurde eine zweite, obere elektrisch leitfähige Kontaktschicht 36 aufgespritzt. Die Schicht 34 mit negativem Temperaturkoeffizienten ist so konditioniert, dass bereits eine lokale Überschreitung eines vorgegebenen Temperaturschwellenwertes in irgendeinem Bereich der Heizleiterschicht 14 dazu führt, dass der zwischen der ersten Kontaktschicht 32 und der zweiten Kontaktschicht 36 wirksame Gesamtwiderstand oder die dort wirksame Gesamtimpedanz der Schicht 34 mit negativem Temperaturkoeffizienten aufgrund des Parallelschaltungscharakters des Aufbaus deutlich abnimmt. Dies kann von einer analog zur Figur 1 zwischen die Kontaktschichten 32 und 36 geschalteten, aber in Figur 2 nicht dargestellten Messeinrichtung sicher detektiert werden, so dass geeignete Gegenmaßnahmen ergriffen werden können.

Bei Schichtheizelementen, wie sie hier beschrieben werden, kann in seltenen Fällen der schwerwiegende Fehler einer Lichtbogenentstehung auftreten. Beispielsweise wenn die Heizleiterschicht 14 aufschmilzt, kann es an dieser in der Regel lokalen Aufschmelzung zur Lichtbogenzündung kommen, insbesondere wenn die Heizleiterschicht mit vergleichsweise hohen Spannungen von einigen hundert Volt betrieben wird. Das Problem der Lichtbogenbildung ist bei mit Gleichspannung betriebenen Heizleiterschichten 14 gravierender als bei mit Wechselspannung betriebenen Heizleiterschichten. Denn beim Betrieb mit Wechselspannung erlöschen die Lichtbögen durch die periodischen Nulldurchgänge der Spannung üblicherweise nach kurzer Zeit von selbst. Dies ist beim Betrieb mit Gleichspannungen - auch mit pulsweitenmodulierten Gleichspannungen - in der Regel nicht der Fall. Gerade bei Gleichspannungsanwendungen ist es daher umso wichtiger, Lichtbögen zu erkennen und durch ein Abschalten des Heizstroms zu löschen, um eine Brandgefahr ausschließen zu können. Im Falle einer Lichtbogenzündung wird ausgehend von der Heizleiterschicht 14 beziehungsweise im Falle von mehrschichtigen Heizleiterschichten ausgehend von der eigentlichen Heizschicht 28 ein elektrisch leitfähiger Gaskanal 38 gebildet, der die übrigen Schichten auf der vom Grundkörper abgewandten Seite der Heizleiterschicht 14 durchschlägt beziehungsweise durchdringt. Auch ein derartiger Gaskanal 38 führt zu einem Stromfluss durch die Schicht 34 mit negativem Temperaturkoeffizienten. Dies führt dazu, dass der zwischen der ersten Kontaktschicht 32 und der zweiten Kontaktschicht 36 gemessene Gesamtwiderstand oder die dort gemessene Gesamtimpedanz der Schicht 34 mit negativem Temperaturkoeffizienten plötzlich deutlich abnimmt. Dies kann von einer analog zur Figur 1 zwischen die Kontaktschichten 32 und 36 geschalteten, aber in Figur 2 nicht dargestellten Messeinrichtung sicher detektiert werden, so dass die Stromzufuhr zur Heizleiterschicht 14 beziehungsweise zur eigentlichen Heizschicht 28 abgestellt werden kann, um den Lichtbogen zu löschen. Besonders vorteilhaft ist es, wenn die Messeinrichtung 18 und/oder der Controller 20 zwischen durch Lichtbögen verursachten Widerstands- beziehungsweise Impedanzänderungen und durch ohne Lichtbögen auftretenden lokalen oder allgemeinen Überhitzungszuständen unterscheiden kann. Eine derartige Unterscheidung kann beispielsweise auf der Grundlage von rechnerisch oder durch Versuch bestimmten Schwellenwerten oder Kennlinienfeldern erfolgen. Dadurch ist es beispielsweise möglich, die Fahrzeugheizung im Falle einer Lichtbogenbildung bis zu einer Instandsetzung endgültig abzuschalten. Bei temporären Störungen, im Falle einer Wasserheizung beispielsweise fehlender oder stehender Flüssigkeit, ist es dadurch möglich, die Fahrzeugheizung nur vorübergehend abzuschalten. Es ist klar, dass eine Lichtbogenentstehung auch bei der in Figur 1 dargestellten Ausführungsform in analoger Weise erkannt werden kann, auch wenn dort kein Gaskanal eingezeichnet ist.

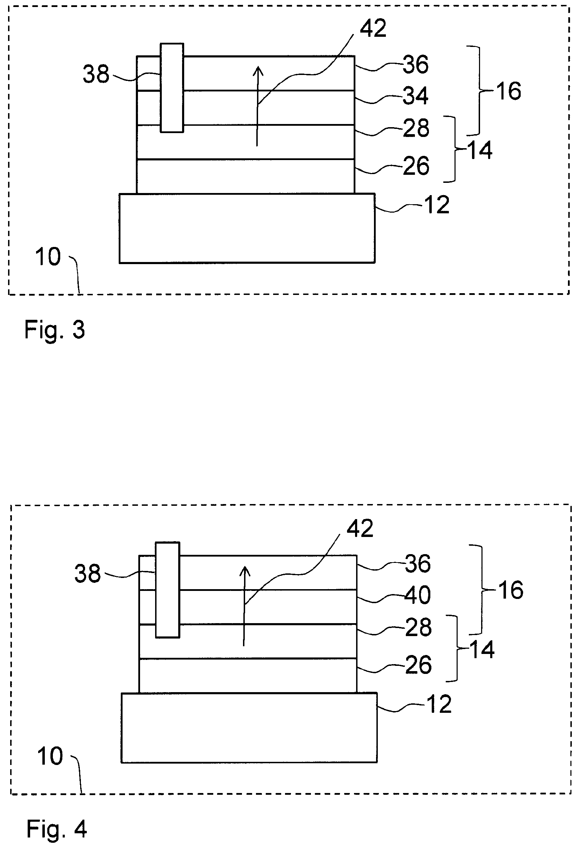

Figur 3 zeigt eine schematische, teilweise geschnittene Darstellung einer dritten Ausführungsform einer Fahrzeugheizung 10, und sie veranschaulicht gleichzeitig Verfahrensschritte zur Herstellung dieser Fahrzeugheizung 10.

Die in Figur 3 dargestellte Fahrzeugheizung 10 unterscheidet sich von der Fahrzeugheizung gemäß Figur 2 dadurch, dass dort auf die zweite Isolationsschicht 30 und die erste Kontaktschicht 32 verzichtet wurde. Bei der in Figur 3 dargestellten Ausführungsform umfasst die Heizleiterschicht 14 daher nur die untere, erste Isolationsschicht 26 und die eigentliche Heizschicht 28. Dabei übernimmt die eigentliche Heizschicht 28 eine Doppelfunktion, weil sie neben der Heizfunktion auch als untere Kontaktschicht der insgesamt mit 16 bezeichneten Sensorschicht dient. Zur Sensorschicht 16 zählen daher in diesem Fall die eigentliche Heizschicht 28, die Schicht 34 mit negativem Temperaturkoeffizienten und die obere Kontaktschicht 36. Die auch in Figur 3 nicht dargestellte Messeinrichtung ist daher zwischen die eigentliche Heizschicht 28 und die obere Kontaktschicht 36 zu schalten, um die anhand von Figur 2 erläuterte Funktionalität zu erhalten.

Ein durch eine Lichtbogenzündung verursachter Gaskanal 38 geht in diesem Fall von der eigentlichen Heizschicht 28 aus und erstreckt sich durch die Schicht 34 mit negativem Temperaturkoeffizienten, so dass er durch eine zwischen die eigentliche Heizschicht 28 und die obere Kontaktschicht 36 geschaltete, in Figur 3 nicht dargestellte Messeinrichtung detektiert werden kann, wie dies anhand von Figur 2 erläutert wurde.

Figur 4 zeigt eine schematische, teilweise geschnittene Darstellung einer vierten Ausführungsform einer Fahrzeugheizung 10, und sie veranschaulicht gleichzeitig Verfahrensschritte zur Herstellung dieser Fahrzeugheizung 10.

Die in Figur 4 dargestellte Ausführungsform unterscheidet sich dadurch von der Ausführungsform gemäß Figur 3, dass die Sensorschicht 16 anstelle der in Figur 3 gezeigten Schicht 34 mit negativem Temperaturkoeffizienten eine Isolationsschicht 40 umfasst. Mit einer derartig vereinfachten Anordnung ist es immer noch möglich, mit Hilfe einer zwischen die eigentliche Heizschicht 28 und die obere Kontaktschicht 36 geschalteten Messeinrichtung (in Figur 4 nicht dargestellt) einen durch eine Lichtbogenzündung verursachten Gaskanal 38 sicher zu detektieren, weil in einem solchen Fall die Isolationsschicht 40 von dem Gaskanal 38 durchdrungen wird. Insbesondere wenn es sich bei dem Grundkörper 12 um einen elektrisch nicht leitfähigen Grundkörper handelt, kann die Isolationsschicht 26 gegebenenfalls entfallen.

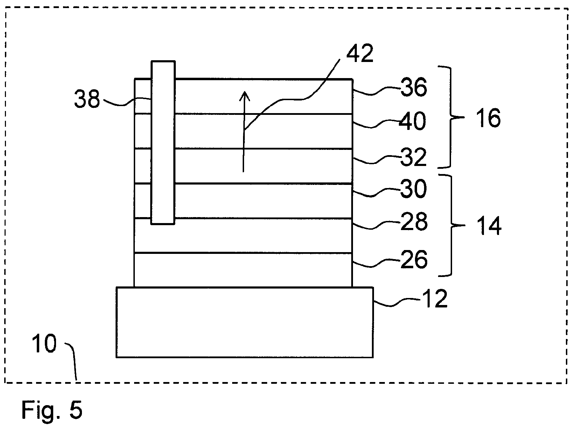

Figur 5 zeigt eine schematische, teilweise geschnittene Darstellung einer fünften Ausführungsform einer Fahrzeugheizung 10, und sie veranschaulicht gleichzeitig Verfahrensschritte zur Herstellung dieser Fahrzeugheizung 10.

Die in Figur 5 dargestellte Ausführungsform unterscheidet sich dadurch von der Ausführungsform gemäß Figur 2, dass die Sensorschicht 16 anstelle der in Figur 2 gezeigten Schicht 34 mit negativem Temperaturkoeffizienten eine Isolationsschicht 40 umfasst. Auch mit einer derartig vereinfachten Anordnung ist es immer noch möglich, mit Hilfe einer zwischen die untere Kontaktschicht 32 und die obere Kontaktschicht 36 geschalteten Messeinrichtung (in Figur 5 nicht dargestellt) einen durch eine Lichtbogenzündung verursachten Gaskanal 38 sicher zu detektieren, weil in einem solchen Fall die Isolationsschicht 40 von dem Gaskanal 38 durchdrungen wird. Insbesondere wenn es sich bei dem Grundkörper 12 um einen elektrisch nicht leitfähigen Grundkörper handelt, kann die Isolationsschicht 26 auch bei dieser Ausführungsform gegebenenfalls entfallen.

Wie erwähnt werden die jeweiligen Sensorschichten 16 (und vorzugsweise auch die übrigen hier erläuterten Schichten) in bevorzugter Weise durch ein thermisches Spritzverfahren auf den Grundkörper 12 aufgebracht. Es sind aber im Rahmen der Erfindung auch Lösungen denkbar, bei denen die jeweilige Sensorschicht 16 als separates Bauteil hergestellt und dann auf der Heizleiterschicht 14 befestigt wird, beispielsweise durch Klemmen, Kleben oder thermisches Anbinden mit Wärmeleitfolie. Wenn der Sensor beziehungsweise die Sensorschicht 16 als separates Bauteil hergestellt werden, ist es natürlich auch im Falle von wärmeempfindlichen Grundkörpern möglich, zur Herstellung der Sensorschicht 16 übliche Einbrennverfahren beziehungsweise hochschmelzende und/oder nicht spritzbare Materialien zu verwenden.

Bei den vorstehend erwähnten Isolationsschichten 26, 30 und 40 kann es sich beispielsweise um Aluminiumoxidschichten handeln, während die Heizleiterschicht 14 beziehungsweise die eigentliche Heizschicht 28 beispielsweise durch eine Nickelchromschicht verwirklicht werden kann. Als Kontaktschichten 32, 36 können beispielsweise Kupferschichten dienen und als Schicht 34 mit negativem Temperaturkoeffizienten kommt neben den im allgemeinen Teil der Beschreibung bereits genannten Materialien beispielsweise auch eine Schicht aus mit Chromoxid dotiertem Titanoxid in Betracht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Fahrzeugheizung
- 12: Grundkörper/Wärmetauscher
- 14: Heizleiterschicht
- 16: Sensorschicht
- 18: Messeinrichtung
- 20: Controller
- 22: Schicht mit negativem Temperaturkoeffizienten
- 24: Kontaktschicht
- 26: Erste Isolationsschicht
- 28: Eigentliche Heizschicht
- 30: Zweite Isolationsschicht
- 32: Erste Kontaktschicht
- 34: Material mit negativem Temperaturkoeffizienten
- 36: Zweite Kontaktschicht
- 38: Durch eventuellen Lichtbogen verursachter Gaskanal
- 40: Isolationsschicht
- 42: Flächennormale der Sensorschicht

## Patentansprüche

1. Fahrzeugheizung (10) mit einem Grundkörper (12), der eine nicht-eigensichere Heizleiterschicht (14) trägt, und mit einer der Heizleiterschicht (14) zugeordneten Sensoreinrichtung (16, 18, 20), die dazu vorgesehen ist, eine Überschreitung eines Temperaturschwellenwertes zu detektieren, **dadurch gekennzeichnet, dass** die Sensoreinrichtung (16, 18, 20) eine auf der von dem Grundkörper (12) abgewandten Seite der Heizleiterschicht (14) angeordnete Sensorschicht (16) umfasst, die bezüglich Stromflüssen überwacht wird, die im Wesentlichen in Richtung ihrer Flächennormalen (42) auftreten.

2. Fahrzeugheizung (10) nach Anspruch 1, **dadurch gekennzeichnet, dass** die Sensorschicht (16) mit Hilfe eines thermischen Spritzverfahrens ausgebildet wurde.

3. Fahrzeugheizung (10) nach Anspruch 1 oder 2, **dadurch gekennzeichnet, dass** die Sensorschicht (16) zumindest bereichsweise eine Widerstands- beziehungsweise Impedanzcharakteristik mit einem negativen Temperaturkoeffizienten aufweist.

4. Fahrzeugheizung (10) nach einem der vorhergehenden Ansprüche, **dadurch gekennzeichnet, dass** die Sensorschicht (16) zumindest bereichsweise eine Isolationsschicht (40) aufweist, durch die nur bei Durchschlägen oder Lichtbogenbildung ein Stromfluss auftritt, der im Wesentlichen die Richtung ihrer Flächennormalen (42) hat.

5. Fahrzeugheizung (10) nach einem der vorhergehenden Ansprüche, **dadurch gekennzeichnet, dass** die Sensorschicht (16) eine untere Kontaktschicht (14; 32; 28) und eine obere Kontaktschicht (24; 36) umfasst.

6. Verfahren zur Herstellung einer Fahrzeugheizung (10), insbesondere einer Fahrzeugheizung (10) nach einem der vorhergehenden Ansprüche, bei dem ein Grundkörper (12) der Fahrzeugheizung (10) mit einer nicht-eigensicheren Heizleiterschicht (14) und einer Sensoreinrichtung (16, 18, 20) zur Detektion von Temperaturschwellenwertüberschreitungen ausgestattet wird, **dadurch gekennzeichnet, dass** der Heizleiterschicht (14) auf ihrer von dem Grundkörper (12) abgewandten Seite zur Ausbildung der Sensoreinrichtung (16, 18, 20) eine Sensorschicht (16) zugeordnet wird, die dazu vorgesehen ist, auf Stromflüsse überwacht zu werden, die im Wesentlichen in Richtung der Flächennormalen (42) der Sensorschicht (16) auftreten.

7. Verfahren nach Anspruch 6, **dadurch gekennzeichnet, dass** die Sensorschicht (16) mit Hilfe eines thermischen Spritzverfahrens ausgebildet wird.

8. Verfahren nach Anspruch 6 oder 7, **dadurch gekennzeichnet, dass** die Sensorschicht (16) zumindest bereichsweise mit einer Widerstands- beziehungsweise Impedanzcharakteristik ausgestattet wird, die einen negativen Temperaturkoeffizienten aufweist.

9. Verfahren nach einem der Ansprüche 6 bis 8, **dadurch gekennzeichnet, dass** die Sensorschicht (16) zumindest bereichsweise als eine Isolationsschicht (40) ausgebildet wird, durch die nur bei Durchschlägen oder Lichtbogenbildung ein Stromfluss auftritt, der im Wesentlichen die Richtung ihrer Flächennormalen (42) hat.

10. Verfahren nach einem der Ansprüche 6 bis 9, **dadurch gekennzeichnet, dass** der Sensorschicht (16) eine untere Kontaktschicht (14; 32; 28) und eine obere Kontaktschicht (24; 36) zugeordnet werden.

## Claims

1. Vehicle heater (10) comprising a main body (12), which is fitted with a heating conductor layer (14) which is not intrinsically safe, and having a sensor device (16, 18, 20) which is associated with the heating conductor layer (14) and which is provided for detecting when a temperature threshold value is exceeded, **characterized in that** the sensor device (16, 18, 20) comprises a sensor layer (16) which is arranged on that side of the heating conductor layer (14) which is averted from the main body (12), which sensor layer is monitored in respect of current flows which occur substantially in the direction of the surface normal (42) of the said sensor layer.

2. Vehicle heater (10) according to Claim 1, **characterized in that** the sensor layer (16) has been formed using a thermal spraying process.

3. Vehicle heater (10) according to Claim 1 or 2, **characterized in that** the sensor layer (16), at least in regions, has a resistance or impedance characteristic with a negative temperature coefficient.

4. Vehicle heater (10) according to one of the preceding claims, **characterized in that** the sensor layer (16), at least in regions, has an insulation layer (40) through which a current flow which substantially has the direction of the surface normal (42) of the said insulation layer occurs only in the event of flashovers or arc formation.

5. Vehicle heater (10) according to one of the preceding claims, **characterized in that** the sensor layer (16) comprises a lower contact layer (14; 32; 28) and an upper contact layer (24; 36).

6. Method for producing a vehicle heater (10), in particular a vehicle heater (10) according to one of the preceding claims, in which method a main body (12) of the vehicle heater (10) is equipped with a heating conductor layer (14) which is not intrinsically safe and with a sensor device (16, 18, 20) for detecting situations in which a temperature threshold value is exceeded, **characterized in that** a sensor layer (16) which is provided for being monitored for current flows which occur substantially in the direction of the surface normal (42) of the sensor layer (16) is associated with the heating conductor layer (14) on that side of the said heating conductor layer which is averted from the main body (12) for the purpose of forming the sensor device (16, 18, 20).

7. Method according to Claim 6, **characterized in that** the sensor layer (16) is formed using a thermal spraying method.

8. Method according to Claim 6 or 7, **characterized in that** the sensor layer (16), at least in regions, is equipped with a resistance or impedance characteristic which has a negative temperature coefficient.

9. Method according to one of Claims 6 to 8, **characterized in that** the sensor layer (16), at least in regions, is in the form of an insulation layer (40) through which a current flow which substantially has the direction of the surface normal (42) of the said insulation layer occurs only in the event of flashovers or arc formation.

10. Method according to one of Claims 6 to 9, **characterized in that** a lower contact layer (14; 32; 28) and an upper contact layer (24; 36) are associated with the sensor layer (16).

## Revendications

1. Chauffage de véhicule (10) comprenant un corps de base (12) qui comporte une couche conductrice chauffante (14) sans sécurité intrinsèque, et comprenant un dispositif détecteur (16, 18, 20) associé à la couche conductrice chauffante (14), lequel est conçu pour détecter un dépassement d'une valeur de seuil de température, **caractérisé en ce que** le dispositif détecteur (16, 18, 20) comprend une couche de détection (16) disposée sur le côté de la couche conductrice chauffante (14) qui est à l'opposé du corps de base (12), laquelle est surveillée pour y détecter les flux de courant qui se produisent sensiblement dans la direction de la normale à sa surface (42).

2. Chauffage de véhicule (10) selon la revendication 1, **caractérisé en ce que** la couche de détection (16) a été formée à l'aide d'un procédé de pulvérisation thermique.

3. Chauffage de véhicule (10) selon la revendication 1 ou 2, **caractérisé en ce que** la couche de détection (16) possède au moins dans certaines zones une caractéristique de résistance ou d'impédance ayant un coefficient de température négatif.

4. Chauffage de véhicule (10) selon l'une des revendications précédentes, **caractérisé en ce que** la couche de détection (16) possède au moins dans certaines zones une couche isolante (40) à travers laquelle un flux de courant, dont la direction est sensiblement celle de la normale à sa surface (42), ne se produit que dans le cas des claquages ou de la formation d'un arc électrique.

5. Chauffage de véhicule (10) selon l'une des revendications précédentes, **caractérisé en ce que** la couche de détection (16) comprend une couche de contact inférieure (14 ; 32 ; 28) et une couche de contact supérieure (24 ; 36).

6. Procédé de fabrication d'un chauffage de véhicule (10), notamment d'un chauffage de véhicule (10) selon l'une des revendications précédentes, selon lequel un corps de base (12) du chauffage de véhicule (10) est équipé d'une couche conductrice chauffante (14) sans sécurité intrinsèque et d'un dispositif détecteur (16, 18, 20) destiné à détecter les dépassements d'une valeur de seuil de température, **caractérisé en ce qu'**une couche de détection (16) est associée à la couche conductrice chauffante (14) sur son côté qui est à l'opposé du corps de base (12) en vue de former le dispositif détecteur (16, 18, 20), laquelle couche de détection est conçue pour être surveillée en vue d'y détecter les flux de courant qui se produisent sensiblement dans la direction de la normale à la surface (42) de la couche de détection (16).

7. Procédé selon la revendication 6, **caractérisé en ce que** la couche de détection (16) est formée à l'aide d'un procédé de pulvérisation thermique.

8. Procédé selon la revendication 6 ou 7, **caractérisé en ce que** la couche de détection (16) est pourvue au moins dans certaines zones d'une caractéristique de résistance ou d'impédance qui présente un coefficient de température négatif.

9. Procédé selon l'une des revendications 6 à 8, **caractérisé en ce que** la couche de détection (16) est réalisée au moins dans certaines zones sous la forme d'une couche isolante (40) à travers laquelle un flux de courant, dont la direction est sensiblement celle de la normale à sa surface (42), ne se produit que dans le cas des claquages ou de la formation d'un arc électrique.

10. Procédé selon l'une des revendications 6 à 9, **caractérisé en ce qu'**une couche de contact inférieure (14 ; 32 ; 28) et une couche de contact supérieure (24 ; 36) sont associées à la couche de détection (16).
